# FASCICULE DE BREVET EUROPEEN

(11) **EP 3 277 632 B1**
(45) Date de publication et mention de la délivrance du brevet: **05.08.2020**
(21) Numéro de dépôt: 16731189.3
(22) Date de dépôt: 31.03.2016
(51) Int. Cl.: C01G 9/00, B01J 23/06, B01J 37/04, B01J 37/08, B01J 35/00, B01J 37/00, H01M 4/08, H01M 4/48, H01M 4/24, H01M 4/26, H01M 4/58, H01M 4/62, A01N 59/16

(54) **PROCÉDÉ DE FABRICATION DE CRISTAUX DE ZINCATE DE CALCIUM, POUDRE OU SUSPENSION DE CRISTAUX DE ZINCATE DE CALCIUM AINSI QUE LEURS UTILISATIONS**
VERFAHREN ZUR HERSTELLUNG VON CALCIUMZINKATKRISTALLEN, PULVER ODER SUSPENSION DIESER CALCIUMZINAKTKRISTALLE UND IHRE VERWENDUNGEN
METHOD FOR MANUFACTURING CALCIUM ZINCATE CRYSTALS, POWDER OR SUSPENSION OF CALCIUM ZINCATE CRYSTALS, AND THE USES THEREOF

(30) Priorité: 03.04.2015 FR 1552884
(43) Date de publication de la demande: 07.02.2018
(73) Titulaire: Easyl, 74130 Bonneville (FR)
(72) Inventeur: LACOSTE, François, 92200 Neuilly sur Seine (FR); THIEL, Julien, 74930 Arbusigny (FR)
(74) Mandataire: Jacobacci Coralis Harle
(86) Numéro de dépôt international: PCT/FR2016/050736
(87) Numéro de publication internationale: WO 2016/156749

(56) Documents cités:
- CN-A- 1 595 688
- ZHU X-M ET AL: "STRUCTURAL AND ELECTROCHEMICAL CHARACTERIZATION OF MECHANOCHEMICALLY SYNTHESIZED CALCIUM ZINCATE AS RECHARGEABLE ANODIC MATERIALS", JOURNAL OF APPLIED ELECTROCHEMISTRY, SPRINGER, DORDRECHT, NL, vol. 33, no. 7, 1 juillet 2003 (2003-07-01), pages 607-612, XP001211650, ISSN: 0021-891X, DOI: 10.1023/A:1024999207178 cité dans la demande
- HUABIN YANG ET AL: "Calcium Zincate Synthesized by Ballmilling as a Negative Material for Secondary Alkaline Batteries", JOURNAL OF THE ELECTROCHEMICAL SOCIETY, vol. 151, no. 12, 1 janvier 2004 (2004-01-01), page A2126, XP055248646, ISSN: 0013-4651, DOI: 10.1149/1.1815158 cité dans la demande
- ELJKA KESI ET AL: "Mechanochemical preparation and characterization of CaOZnO used as catalyst for biodiesel synthesis", APPLIED CATALYSIS A: GENERAL, ELSEVIER SCIENCE, AMSTERDAM, NL, vol. 427, 22 mars 2012 (2012-03-22), pages 58-65, XP028480472, ISSN: 0926-860X, DOI: 10.1016/J.APCATA.2012.03.032 [extrait le 2012-04-01] cité dans la demande
- N.M. GÓMEZ-ORTÍZ ET AL: "Antifungal activity of Ca[Zn(OH)3]2.2H2O coatings for the preservation of limestone monuments: An in vitro study", INTERNATIONAL BIODETERIORATION AND BIODEGRADATION, vol. 91, 27 mars 2014 (2014-03-27), pages 1-8, XP055248857, GB ISSN: 0964-8305, DOI: 10.1016/j.ibiod.2014.02.005 cité dans la demande

## Description

### Domaine de l'invention

La présente invention se rapporte à un procédé de fabrication de cristaux de zincate de calcium.

En particulier, la présente invention concerne un procédé de fabrication de cristaux de zincate de calcium, effectué par microbroyage, dans un fort excédent d'eau et notamment sans chauffage particulier, d'un mélange comprenant au moins de l'oxyde de zinc et de l'hydroxyde de calcium.

La présente invention porte également sur une poudre ou une suspension de cristaux de zincate de calcium obtenue selon le procédé tel que défini ci-dessus.

L'invention a également trait aux utilisations des cristaux de zincate obtenus avec le procédé susmentionné pour fabriquer : une anode de zinc d'un générateur électrochimique alcalin, un catalyseur hétérogène pour la production de biodiesel ou encore un produit antifongique.

### Etat de la technique

Le zincate de calcium, de formule Ca[Zn(OH)₃]₂.2H₂O, a fait l'objet de nombreuses recherches en vue de son utilisation dans des domaines très variés, notamment celui des générateurs électrochimiques alcalins, tels que des accumulateurs alcalins en Nickel(Ni)/Zinc (Zn). Le zincate de calcium peut notamment être incorporé dans la masse active de l'électrode de zinc afin de former de telles batteries alcalines.

A cet effet, depuis une soixantaine d'années, de nombreux procédés de synthèse ont été expérimentés dans l'état de la technique.

Une première approche proposée consiste à synthétiser les cristaux de zincate de calcium par voie chimique, dans un milieu alcalin.

Le document SU116812 (ci-après « Zhulidov ») de 1958 décrit un procédé d'obtention électrolytique, dans un bac muni d'anodes et de cathodes en zinc et contenant une solution de soude caustique, consistant à faire réagir une suspension concentrée d'hydroxyde de calcium avec l'oxyde de zinc libéré par l'électrolyse. La température du bain est limitée à 80°C et l'eau vaporisée est régulièrement compensée par ajout. La durée de l'opération n'est pas indiquée. Le produit obtenu est lavé et décanté plusieurs fois pour éliminer la soude caustique. La teneur en zincate du produit final est comprise entre 35% et 40%, sans précision sur la méthode de mesure.

La publication de Ram A. Sharma intitulée «Physico-Chemical Properties of Calcium Zincate» issue du «Journal of the electrochemical society » de novembre 1986 (ci-après « Sharma ») décrit la préparation de cristaux de zincate de calcium pur en faisant réagir, dans de la potasse (KOH) à 20% en poids, de l'oxyde de zinc solubilisé avec de l'hydroxyde de calcium ajouté progressivement. L'ensemble de la réaction dure au total environ 24h. Le produit est lavé et décanté plusieurs fois pour éliminer la potasse. Le produit final est constitué de cristaux lamellaires de zincate de calcium pur, ayant généralement une forme de tétragone très caractéristique et dont la dimension moyenne obtenue est de l'ordre de 30 µm. Ce procédé est souvent référencé car il est assez facile à mettre en œuvre dans un laboratoire et il permet d'obtenir un produit pur et bien caractérisé (le spectre de diffraction des rayons X, DRX, présentant des pics caractéristiques à 2θ = 14,14° et 28,57°).

D'autres publications décrivent des procédés similaires afin de synthétiser des cristaux de zincate de calcium. On peut notamment citer les documents suivants : US 3607409, WO 98/44579, WO 2006/032208, ou encore la publication de C.S. Xavier intitulée « A new processing method of CaZn(OH)2.2H2O powders: photoluminescence and growth mechanism » publiée par ELSEVIER et issue de la revue scientifique « Solid State Sciences 11 » (2009) 2173-2179 ; ou encore la publication de Jinhao Hao intitulée « A Facile Route for the Préparation of Calcium Zincate and its Application in Ni-ZN Batteries» publiée par la revue scientifique « Journal of the Electrochemical Society », 161 (5) A704-A707 (2014).

Une deuxième approche proposée dans l'état de la technique afin de fabriquer des cristaux de zincate de calcium consiste à synthétiser ces cristaux par voie thermochimique.

La publication de Shengwei Wang intitulée « Study of calcium zincate synthesized by solid-phase synthesis method without strong alkali" publiée dans la revue "Material Chemistry and Physics 112 (2008) 603-606 (« Wang »), décrit un procédé de préparation de zincate de calcium par simple chauffage à 75°C pendant une durée de 12h, d'une suspension comprenant un mélange en proportions stœchiométriques d'hydroxyde de calcium et d'oxyde de zinc dans de l'eau. Le produit obtenu, après une succession d'un ou deux lavages et filtrations avec de l'eau distillée, est constitué principalement de cristaux bien formés dont la dimension moyenne est de l'ordre de 45 µm.

Cependant, les procédés de synthèse de zincate de calcium obtenus par voie chimique ou par voie thermochimique présentent les inconvénients de nécessiter :
- un temps de réaction relativement long (24 heures par exemple pour le document Sharma ou encore de Jinhao Hao, voire de 2 ou 3 jours pour WO 98/44579) ;
- de nombreuses étapes, dont des étapes de lavage et de décantation, afin d'éliminer les produits secondaires non désirés, tels que la potasse ou la soude caustique, qui sont coûteuses et consommatrices d'eau, ce qui rend en outre ces procédés non réalisables à l'échelle industrielle et peu respectueux de l'environnement ;
- voire de nécessiter une étape de chauffage au-dessus de 40°C (75°C pendant 12 heures pour la publication de Wang, 40 à 80°C pour le document WO2006/032208, voire 130°C pour la publication de C.S Xavier).

Une dernière approche afin de fabriquer des cristaux de zincate de calcium consiste à les synthétiser par mécano-synthèse.

La publication de Huabin Yang intitulée « Calcium Zincate Synthesized by Ballmilling as a Negative Material for Secondary Alkaline Batteries » issue du « Journal of the Electrochemical Society », 151 (12) A2126-A2131 de 2004 (ci-après « Yang »), divulgue un procédé de préparation de zincate de calcium par mécano-synthèse en broyant, dans un bol en acier avec des billes en acier de 10 et 20 mm de diamètre, un mélange en proportions stœchiométriques d'hydroxyde de calcium et d'oxyde de zinc, avec ajout d'eau dans une teneur strictement nécessaire pour la formation du zincate. La masse des billes est égale à 4 fois celle du mélange broyé. La vitesse de rotation du bol est de 300 tr/min et le broyage dure 9h. L'auteur note que l'élévation de température pendant ce broyage intense peut contribuer à faciliter la synthèse. L'analyse du spectre par diffraction des rayons X (DRX) du produit final indique que la conversion en zincate de calcium du mélange initial est complète et que les intensités relatives des différentes lignes de ce spectre sont très voisines de celles obtenues par le procédé décrit dans la publication de « Sharma ». Compte tenu du broyage intense effectué sur ce zincate, il n'est pas étonnant que sa granulométrie moyenne soit de l'ordre de 3 µm.

On connaît également dans l'état de la technique, la publication de X-M Zhu intitulée « Structural and electrochemical characterization of mechanochemically synthesized calcium zincate as rechargeable anodic materials » issue du « Journal of Applied Electrochemistry 33 :607-612 », de 2003. Cette publication décrit également un procédé de préparation de zincate de calcium par mécano-synthèse. Ce procédé consiste à broyer dans un bol en agate avec des billes en agate de 10 mm de diamètre, un mélange en proportions stœchiométriques d'hydroxyde de calcium et d'oxyde de zinc, avec de l'eau dans une teneur strictement nécessaire pour la formation du zincate de calcium. La masse des billes est égale à 4 fois celle du mélange broyé et la vitesse de rotation est de 70 tr/min. L'auteur a étudié l'évolution du spectre par diffraction des rayons X (DRX) du produit final en fonction de la durée du broyage. Il apparaît qu'il faut au moins 2h pour faire disparaître les lignes correspondant à l'hydroxyde de calcium et à l'oxyde de zinc initial, et qu'il faut poursuivre le broyage pendant 48h pour obtenir un spectre dont les intensités relatives des lignes soient comparables à celles obtenues par les procédés décrits dans « Sharma ». La comparaison de la vitesse de décomposition dans de la potasse à 20 % en poids des zincates de calcium obtenus après des broyages courts ou longs fait apparaître que les zincates de calcium obtenus après un long broyage sont plus stables que ceux qui n'ont subi qu'un broyage court.

Les procédés par mécano-synthèse connus présentent ainsi les inconvénients de nécessiter, tout comme les procédés par voie chimique ou thermique, un temps de réaction extrêmement long, à savoir de 9 à 18 heures pour Yang et 48 heures pour Zhu et d'être par conséquent, difficilement transposables à l'échelle industrielle.

Ainsi, bien que depuis 1958, de nombreuses recherches ont été effectuées afin de fournir un procédé de fabrication de cristaux de zincate de calcium qui soit facile à mettre en œuvre tout en étant industrialisable, aucune de ces recherches n'a permis de mettre au point, jusqu'à ce jour, un tel procédé.

Il existe ainsi un réel besoin d'un nouveau procédé de fabrication de cristaux de zincate de calcium qui permettent la fabrication de tels cristaux de manière rapide, tout en diminuant les risques de pollution et les coûts, rendant ainsi le procédé utilisable à l'échelle industrielle.

Le but de la présente invention est, par conséquent, de proposer un nouveau procédé de fabrication de cristaux de zincate de calcium évitant au moins en partie les inconvénients précités.

### Résumé de l'invention

A cet effet, la présente invention a pour objet un procédé de fabrication de cristaux de zincate de calcium qui comprend au moins les étapes suivantes :
- la mise en suspension d'au moins : de l'hydroxyde de calcium (Ca(OH)₂) et de l'oxyde de zinc (ZnO) ou d'un de ses précurseurs, comme ZnO₂ ou Zn(OH)₂, ou d'un de leurs mélanges, avec de l'eau, dite « suspension de départ », le ratio massique (eau) : (hydroxyde de calcium + oxyde de zinc, un de ses précurseurs ou un de leurs mélanges) étant supérieur ou égal à 1, de préférence allant de 2 à 15 et en particulier allant de 3 à 5 ;
- le broyage de ladite suspension de départ à une température ambiante inférieure ou égale à 50°C, de préférence inférieure ou égale à 35°C, dans un broyeur tridimensionnel à microbilles en phase humide pendant un temps de séjour inférieur ou égal à 15 min, de préférence inférieur ou égal à 1 minute, et allant notamment de 5 à 25 secondes et en particulier de 10 à 20 secondes ;
- la récupération en sortie du broyeur d'une suspension de cristaux de zincate de calcium, et
- optionnellement, ladite suspension de cristaux de zincate de calcium est concentrée ou séchée de sorte à obtenir une poudre de cristaux de zincate de calcium.

Pour le reste de la description, à moins qu'il n'en soit spécifié autrement, l'indication d'un intervalle de valeurs « de X à Y » ou « entre X et Y », dans la présente invention, s'entend comme incluant les valeurs X et Y.

La présente invention a également pour objet une poudre ou une suspension de cristaux de zincate de calcium obtenue selon le procédé décrit ci-dessus, caractérisée en ce que les cristaux se présentent sous forme de micro-losange et présentent les répartitions de population suivantes en fonction de leur granulométrie : 5 µm ≤ Dₓ50 ≤ 13 µm et 10 µm ≤ Dₓ90 ≤ 20 µm mesurées avec un granulométre laser en voie liquide. Du fait du courant d'entraînement qui oriente les particules dans le sens de la longueur, les valeurs mesurées par le granulométre correspondent à leurs grands axes.

La présente invention a également pour objet l'utilisation d'une poudre ou d'une suspension de cristaux de zincate de calcium telle que décrite ci-dessus pour fabriquer une anode de zinc d'un générateur électrochimique alcalin.

Un autre objet de la présente invention est l'utilisation de la poudre ou de la suspension de cristaux de zincate de calcium telle que décrite ci-dessus pour fabriquer un catalyseur hétérogène pour la production de biodiesel, les cristaux de zincate de calcium étant préalablement calcinés à une température supérieure ou égale à 400°C.

Enfin, la présente invention porte sur l'utilisation de la poudre ou de la suspension de cristaux de zincate de calcium telle que décrite ci-dessus en tant que produit antifongique.

### Description détaillée de l'invention

L'invention sera mieux comprise et d'autres buts, détails, caractéristiques et avantages de celle-ci apparaîtront plus clairement à la lecture de la description suivante d'exemples de réalisation, en référence aux figures annexées dans lesquelles :

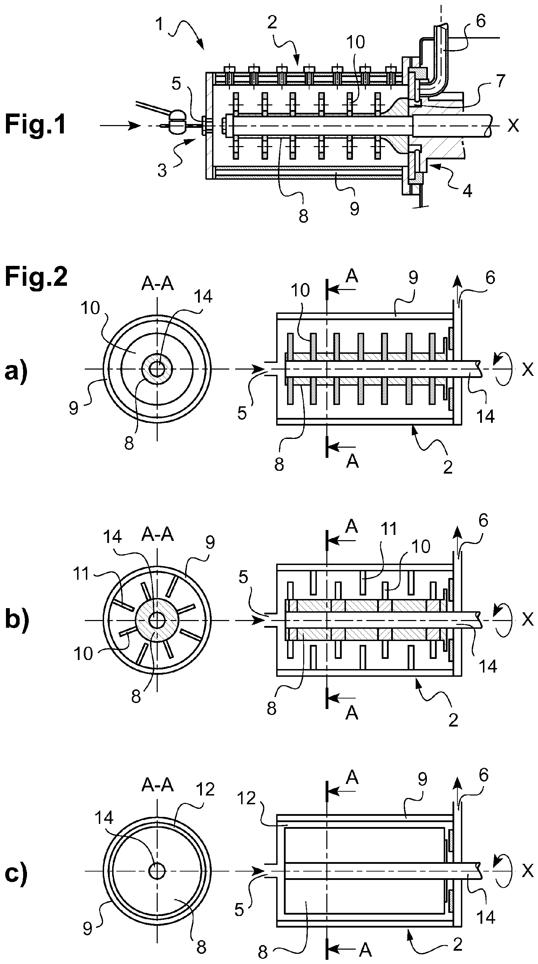

- la figure 1 représente une vue en coupe selon l'axe longitudinal XX d'un broyeur tridimensionnel à microbilles en phase humide, selon une variante de réalisation convenant pour la mise en œuvre du procédé selon l'invention ;
- la figure 2 représente des vues en coupe selon l'axe XX et l'axe AA, de variantes de broyeurs tridimensionnels à microbilles en phase humide selon la figure 1 dans lesquels : (a) l'agitateur est à disques, (b) l'agitateur comporte des doigts et (c) la chambre de broyage est annulaire ;

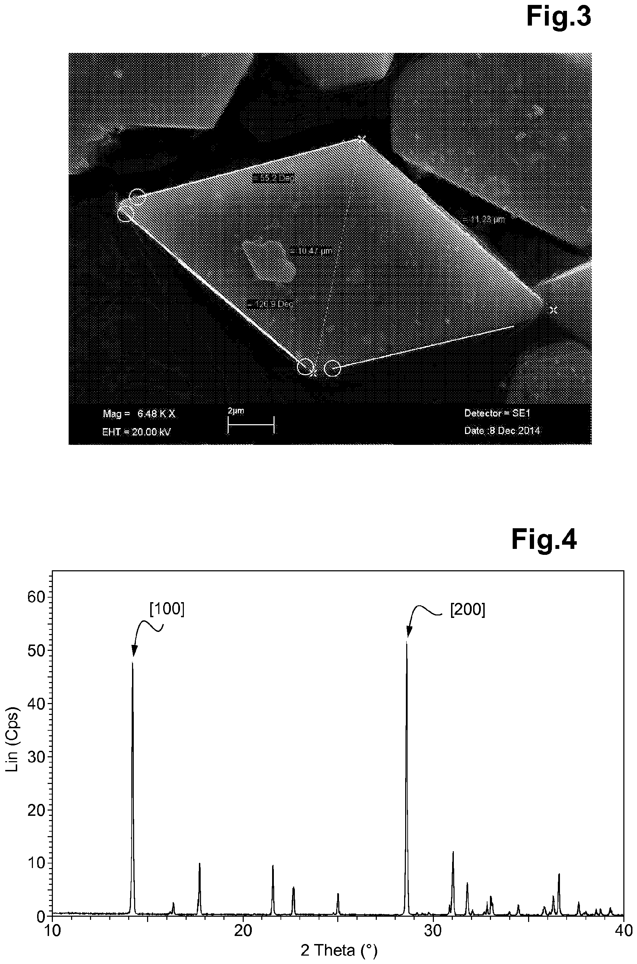

- la figure 3 est une photo de microscopie à balayage électronique (MEB) de cristaux de zincate de calcium obtenus selon le procédé de l'invention en utilisant les paramètres suivants : suspension de départ comprenant 300g/L de matières premières (Ca(OH)₂+ ZnO), un débit de passage de la suspension de départ dans le broyeur de 30L/h et un diamètre de billes de 500 µm ;
- la figure 4 est un spectre de diffractométrie à rayons X (DRX) de cristaux de zincate de calcium obtenus dans les mêmes conditions expérimentales que ceux de la figure 3 ;

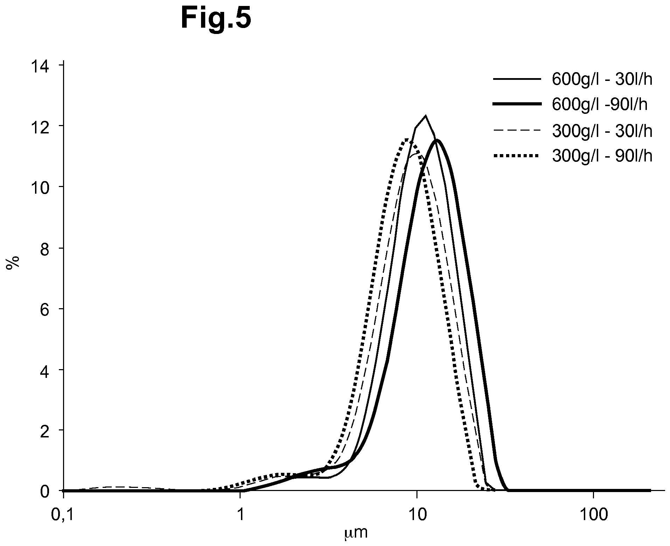

- la figure 5 est un graphique de la répartition dimensionnelle du grand axe des cristaux de zincate de calcium obtenus selon le procédé de l'invention en faisant varier la concentration des matières premières dans la suspension de départ (300g/L ou 600g/L) et/ou le débit de passage (30L/h ou 90L/h) ;

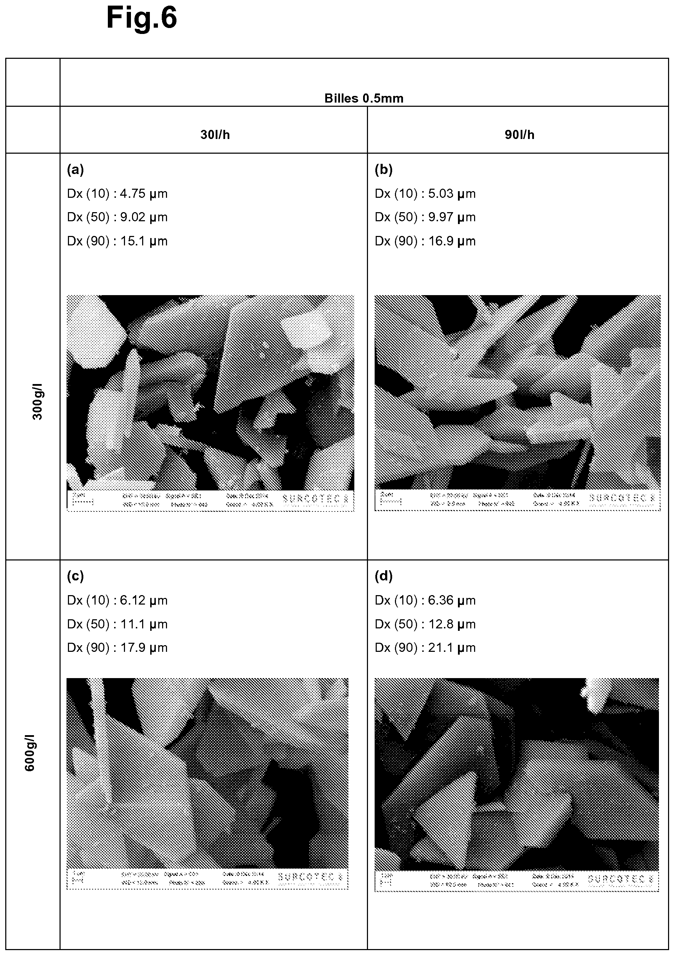

- la figure 6 représente des photos de microscopie à balayage électronique (MEB) de cristaux de zincate de calcium obtenus selon le procédé de l'invention en utilisant un diamètre des billes de 500 µm et les paramètres suivants : (a) concentration en matières premières 300g/L / débit de passage de 30L/h ; (b) concentration en matières premières 300g/L / débit de passage de 90L/h ; (c) concentration en matières premières 600g/L / débit de passage de 30L/h ; (d) concentration en matières premières 600g/L / débit de passage de 90L/h ;

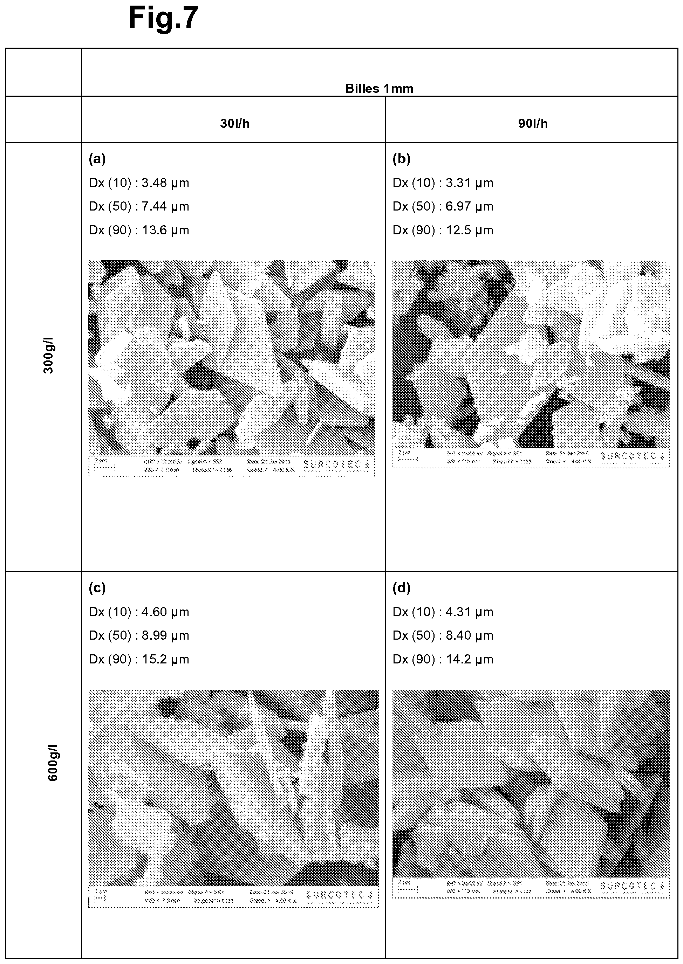

- la figure 7 représente des photos de microscopie à balayage électronique (MEB) de cristaux de zincate de calcium obtenus selon le procédé de l'invention en utilisant un diamètre des billes de 1 mm et les paramètres suivants : (a) concentration en matières premières 300g/L / débit de passage de 30L/h ; (b) concentration en matières premières 300g/L / débit de passage de 90L/h ; (c) concentration en matières premières 600g/L / débit de passage de 30L/h ; (d) concentration en matières premières 600g/L / débit de passage de 90L/h; et

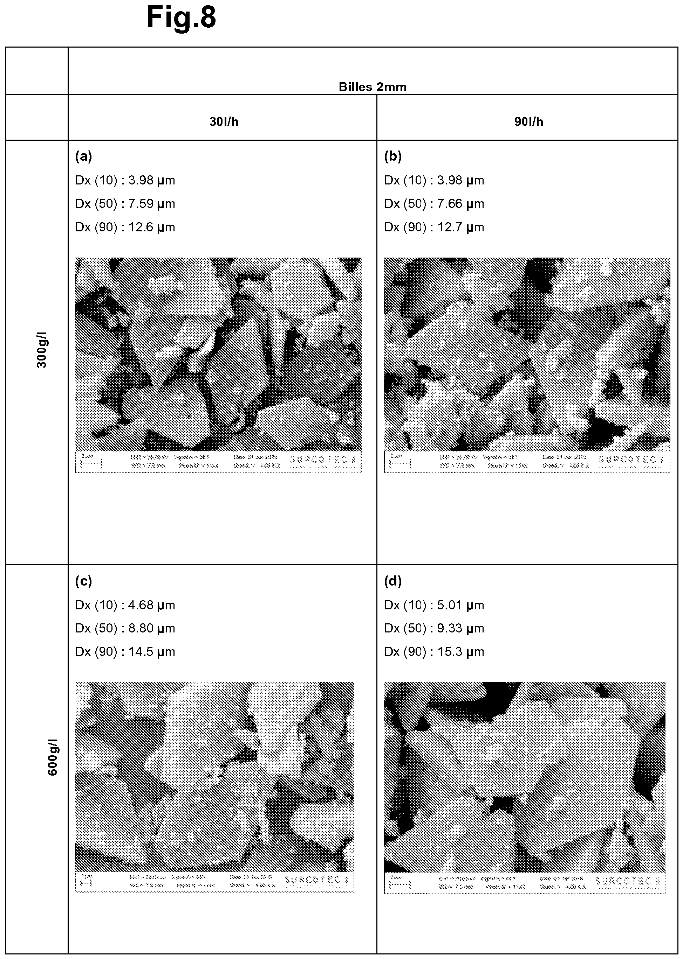

- la figure 8 représente des photos de microscopie à balayage électronique (MEB) de cristaux de zincate de calcium obtenus selon le procédé de l'invention en utilisant des billes de 2 mm et les paramètres suivants : (a) concentration en matières premières 300g/L / débit de passage de 30L/h ; (b) concentration en matières premières 300g/L / débit de passage de 90L/h ; (c) concentration en matières premières 600g/L / débit de passage de 30L/h ; (d) concentration en matières premières 600g/L / débit de passage de 90L/h.

La Demanderesse s'est attachée au développement d'un nouveau procédé de fabrication de cristaux de zincate de calcium adapté pour être mis en œuvre à une échelle industrielle et permettant notamment la synthèse suivante :

Ca(OH)₂ + 2 ZnO + 4 H₂O → Ca[Zn(OH)₃]₂ . 2 H₂O.

En particulier, la présente invention a pour objet un procédé de fabrication de cristaux de zincate de calcium qui comprend au moins les étapes suivantes :
(1) la mise en suspension d'au moins : de l'hydroxyde de calcium (Ca(OH)₂) et de l'oxyde de zinc (ZnO) ou d'un de ses précurseurs comme ZnO₂ ou encore Zn(OH)₂ ou d'un de leurs mélanges, avec de l'eau, dite « suspension de départ », le ratio massique (eau) : (hydroxyde de calcium + oxyde de zinc, un de ses précurseurs ou un de leurs mélanges) étant supérieur ou égal à 1, de préférence allant de 2 à 15 et en particulier allant de 3 à 5 ;
(2) le broyage de ladite suspension de départ à une température ambiante inférieure ou égale à 50°C, de préférence inférieure ou égale à 35°C, dans un broyeur tridimensionnel à microbilles en phase humide pendant un temps de séjour inférieur ou égal à 15 min, de préférence inférieur ou égal à 1 minute, et allant notamment de 5 à 25 secondes et en particulier de 10 à 20 secondes ;
(3) la récupération en sortie du broyeur d'une suspension de cristaux de zincate de calcium, et
(4) optionnellement, ladite suspension de cristaux de zincate de calcium est concentrée ou séchée de sorte à obtenir une poudre de cristaux de zincate de calcium.

La Demanderesse a ainsi mis au point un procédé qui, de façon inattendue, permet de fabriquer des cristaux de zincate de calcium en un temps très court (temps de réaction inférieur ou égal à 15 minutes et en général, inférieur ou égal à 1 minute), en une seule étape, à température ambiante (le procédé ne nécessite pas d'étape de chauffage particulière), et ce avec des consommations d'énergie et d'eau minimales (non polluant), avec en outre un excellent rendement.

Comme cela sera démontré dans les essais ci-dessous, le procédé de l'invention permet de plus d'obtenir de façon surprenante des cristaux de zincate de calcium d'excellente qualité, à savoir très pur et de granulométrie fine et bien contrôlée.

Le procédé selon l'invention présente également les avantages d'avoir un prix de revient très réduit (les matières premières utilisées sont en effet largement disponibles, non polluantes et peu coûteuses) et de présenter une excellente reproductibilité, ce qui le démarque davantage des procédés décrits dans les arts antérieurs. Le procédé selon l'invention présente également l'avantage de pouvoir être mis en œuvre de façon continue. Or, ces caractéristiques sont importantes pour une application à l'échelle industrielle.

En outre, malgré les nombreuses recherches conduites sur la synthèse de cristaux de zincate de calcium depuis 1958, aucune n'a suggéré le procédé susmentionné et en particulier une étape de broyage dans un broyeur tridimensionnel à microbilles à partir d'une suspension de départ comprenant au moins : de l'hydroxyde de calcium (Ca(OH)₂) et de l'oxyde de zinc (ZnO), un de ses précurseurs ou un de leurs mélanges et ce, dans un excédent d'eau.

Pour mieux faire comprendre le procédé objet de l'invention, un broyeur tridimensionnel à microbilles susceptible de permettre l'obtention des cristaux de zincate de calcium, et faisant ainsi partie de l'invention, va tout d'abord être décrit ci-dessous en se référant aux figures 1 et 2.

Tel qu'illustré sur la figure 1, un broyeur tridimensionnel à microbilles 1 comprend au moins :
- une chambre de broyage 2 stationnaire de forme générale cylindrique s'étendant selon un axe longitudinal XX, ladite chambre 2 étant remplie au moins, en partie, par lesdites microbilles (non représentées) et comprend: à une première extrémité 3 au moins une entrée 5 servant à introduire ladite suspension de départ, et à une seconde extrémité 4, une sortie 6 comportant un moyen de séparation 7 apte à n'évacuer que la suspension de zincate de calcium ainsi formée dans ladite chambre 2; et
- un agitateur 8, disposé dans la chambre de broyage 2 stationnaire, se présentant sous forme d'une tige allongée selon l'axe longitudinal XX, ledit agitateur 8 étant apte à mettre en mouvement l'ensemble microbilles/suspension de départ.

En particulier, l'entrée 5 est généralement reliée à une pompe péristaltique (non représentée). Cette pompe permet d'amener la suspension de départ, contenue par exemple dans un récipient, tel qu'une cuve, à l'intérieur de la chambre de broyage 2 via l'entrée 5. La pompe permet en plus, lors du fonctionnement du broyeur tridimensionnel, d'amener cette suspension de départ selon un certain débit qui est réglable, appelé par la suite « débit de passage ». Ce débit de passage forme en outre un courant dans la chambre de broyage 2 permettant d'entraîner la suspension de départ de l'entrée 5 vers la sortie 6.

La sortie 6 de la chambre de broyage 2 comprend en particulier le système de séparation 7 des microbilles de la suspension finale comprenant majoritairement les cristaux de zincate de calcium, de l'eau et éventuellement le solde de matières premières qui n'auraient pas réagi. Ce moyen de séparation 7 peut être un tamis dont les orifices présentent une dimension inférieure à celle des microbilles ou une fente de séparation dont la largeur est également adaptée pour retenir les microbilles au sein de la chambre 2.

La paroi interne 9 de la chambre de broyage 2 comprend selon un premier mode de réalisation une surface interne lisse. Cependant, selon une variante de réalisation qui sera décrite ci-après, il peut être aménagé sur cette surface interne 9 des doigts 11.

Tel que mentionné ci-dessus, à l'intérieur de la chambre de broyage 2 est disposé l'agitateur 8 qui, en plus du débit de passage, permet également la mise en mouvement de la suspension de départ.

En particulier, l'agitateur 8 est apte à tourner autour de l'axe X via un arbre rotatif (14, figure 2) pour impartir au sein de la chambre de broyage 2 un mouvement tourbillonnaire à la suspension de départ et effectuer ainsi un brassage intense entre cette suspension de départ et les microbilles présentes dans la chambre 2 le long de la paroi interne 9 de cette chambre 2.

Afin d'améliorer ce brassage, l'agitateur 8, tout comme la paroi interne 9 de la chambre 2, peuvent présenter diverses configurations possibles représentées par exemple sur la figure 2.

Selon une première configuration illustrée à la figure 2a, l'agitateur 8 comprend le long de sa tige allongée des disques 10, disposés perpendiculairement à celle-ci. Leur nombre peut varier de 2 à 8, de préférence de 2 à 5. Ces disques 10 permettent d'une part, d'améliorer le broyage de la suspension de départ en brassant davantage les microbilles et d'autre part, d'accélérer le temps de réaction.

Selon une deuxième configuration illustrée à la figure 2b, l'agitateur 8 peut également comprendre le long de sa tige un ou plusieurs disques 10 disposés perpendiculaires et qui sont en outre aptes à coopérer avec des doigts 11, disposés perpendiculairement, par rapport à la paroi interne 9 de la chambre 2. Un doigt se présente notamment sous la forme d'un anneau qui s'étend perpendiculairement à partir de la paroi 9. Pour cette configuration, les disques 10 et les doigts 11 sont disposés en quinconce, à savoir les disques 10 et les doigts 11 sont disposés de manière alternée dans la chambre 2. En outre, l'épaisseur de la tige 8 est augmentée par rapport à la configuration précédente (figure 2a) de sorte que la périphérie des disques 10 soit proche de la paroi interne 9 et que celle des doigts 11 soit proche de la périphérie de la tige de l'agitateur 8. Ainsi, dans cette configuration, le volume de la chambre est réduit par rapport à la configuration précédente, permettant par conséquent, un meilleur brassage entre la suspension de départ, les microbilles et la paroi interne 9 de la chambre 2.

Le volume de la chambre 2 peut encore être réduit comme cela est illustré en figure 2c. Dans cette configuration, l'agitateur 8 présente un diamètre externe légèrement inférieur au diamètre interne de la chambre 2, formant ainsi une chambre annulaire 12 de faible volume disposée entre la paroi externe de l'agitateur 8 et la paroi interne 9 de la chambre 2. Les microbilles (non représentées) sont disposées dans cette chambre annulaire 12. Lors du fonctionnement de cette configuration, la suspension de départ est introduite par l'entrée 5 avec un certain débit, qui va ensuite parcourir la chambre annulaire 12 jusqu'à la sortie 6 tout en étant brassée par les microbilles.

En général, le broyeur convenant pour réaliser le procédé selon l'invention comprend une chambre de broyage présentant un diamètre de 75 mm à 300 mm pour une longueur de 80 mm à 900 mm et un agitateur présentant une taille allant de 65 mm à 260 mm. Ainsi, le volume de la chambre de broyage varie de 0,35 L à 600 L, de préférence de 0,35 L à 62 L.

La géométrie de la chambre de broyage et de l'agitateur pourra être ajustée par l'homme du métier en fonction de la quantité de cristaux de zincate de calcium souhaitée, ainsi que du temps de réaction désiré. Par exemple, il est également possible que la chambre de broyage 2 comprenne un accélérateur afin d'améliorer le broyage de la suspension de départ.

En outre, les microbilles logées dans la chambre de broyage 2 et convenant pour le procédé selon l'invention sont substantiellement de forme sphérique et présentent un diamètre moyen allant de 0,05 mm à 4 mm, de préférence de 0,2 à 3 mm, en particulier de 0,3 à 2 mm, et typiquement de l'ordre de 0,5 à 1 mm. De préférence, le diamètre des microbilles est inférieur ou égal à 1 mm.

Elles sont préférentiellement choisies parmi des microbilles présentant une dureté élevée et résistant relativement bien à l'abrasion.

En particulier, les microbilles présentent une dureté de Vickers mesurée selon la norme EN ISO 6507-1 supérieure ou égale à 900 HV1, de préférence allant de 900 HV1 à 1600 HV1, typiquement allant de 1000 à 1400 HV1.

Avantageusement, elles présentent une masse volumique réelle élevée. En général, les microbilles selon l'invention ont une masse volumique réelle supérieure ou égale 2 g/cm³, en particulier allant de 2 à 15 g/cm³, de préférence de 3 à 12 g/cm³, et typiquement de 4 à 10 g/cm³.

Ainsi, les microbilles selon l'invention peuvent être des microbilles en céramique, (oxyde de zirconium ZrO₂, en silicate de zirconium ZrSiO₄) ; des microbilles en acier, des microbilles en carbure de tungstène, des microbilles en verre ou une de leurs combinaisons.

De préférence, les microbilles sont en céramiques car elles ne génèrent pas de pollution par leur usure.

En particulier, les microbilles sont en oxyde de zirconium.

Eventuellement, les microbilles en oxyde de zirconium peuvent être stabilisées par un autre oxyde, tel que l'oxyde de cérium, l'oxyde d'yttrium et/ou le silicium.

A titre d'exemples, les compositions suivantes, résumées dans le tableau 1 ci-dessous, conviennent pour former les microbilles selon l'invention :

**Tableau 1**

| **Composition des microbilles** | **Dureté HV1** | **Masse volumique réelle (g/cm³)** | **Fabricant** |
|---|---|---|---|
| Microbilles en oxyde de zirconium stabilisées par l'oxyde de cérium | 1180 | ≥ 6,10 | Saint-Gobain (Zirmil®Y Ceramic |
| - 80% de ZrO₂ | | | Beads) ou EIP |
| - 20% de CeO | | | (Procerox® ZO Cer) |
| Microbilles en oxyde de zirconium stabilisées par l'yttrium | 1250 | ≥ 5,95 | EIP (Procerox® ZO (Y)) |
| - 95% ZrO₂ | | | |
| - <5% Al₂O₃ | | | |
| - Reste : Y₂O₃ | | | |
| Microbilles en oxyde de zirconium stabilisées par l'yttrium et du silicium : | > 700 | >4,80 | Saint-Gobain (ER120 Ceramic Beads) |
| - 78% ZrO₂, | | | |
| - 12% SiO₂, | | | |
| - 5% Al₂O₃ et | | | |
| - 4% Y₂O₃ | | | |
| Microbilles en silicate de zirconium ZrSiO₄ | ≥ 800 | > 6,5 | Saint-Gobain (Rimax Ceramic Beads) |
| Microbilles en verre | 500 | > 3,76 | - |
| Microbilles en acier | 700 | > 7,7 | - |

En particulier, les microbilles représentent, en volume, par rapport au volume total de la chambre stationnaire 2 de 50 % à 85 %, de préférence de 55 % à 70 %.

A titre d'exemple, le broyeur tridimensionnel à microbilles en phase humide convenant pour réaliser le procédé selon l'invention peut correspondre à des broyeurs commercialisés par les sociétés WAB, gamme Dyno-Mill : Multi Lab, ECM et KD, Société NETZCH, par exemple LABSTAR LS1, ou encore Alpine Hosokawa, par exemple, Agitated Media Mill AHM.

Le procédé de fabrication selon l'invention va désormais être décrit plus explicitement ci-dessous.

Tel qu'indiqué précédemment, la fabrication des cristaux de zincate de calcium selon l'invention comprend tout d'abord (1) une étape de mise en suspension d'au moins les composés suivants : de l'hydroxyde de calcium (Ca(OH)₂) et de l'oxyde de zinc (ZnO) ou un de ses précurseurs ou un de leurs mélanges dans un fort excédent d'eau. La suspension obtenue est appelée ci-après « suspension de départ ».

Au sens de l'invention, un précurseur de l'oxyde de zinc (ZnO) peut correspondre à ZnO₂ ou à un hydroxyde de zinc, tel que Zn(OH)₂.

La suspension de départ peut ainsi comprendre, en plus de l'hydroxyde de calcium (Ca(OH)₂), du ZnO, ou un de ses précurseurs (comme ZnO₂ ou Zn(OH)₂) ou un mélange de ceux-ci, à savoir un mélange ZnO + précurseur(s) ou un mélange de précurseurs (comme ZnO + ZnO₂ ; ZnO + ZnO₂ + Zn(OH)₂ ; ou encore ZnO₂ + Zn(OH)₂ ; etc.).

De préférence, la suspension de départ comprend du ZnO.

Pour le reste de la description, les caractéristiques relatives à ZnO s'entendent comme des caractéristiques relatives à ZnO, ou un de ses précurseurs, ou un mélange de ceux-ci.

La suspension de départ est classiquement préparée par mélange des matières premières (Ca(OH)₂ +ZnO) avec l'eau dans un dispositif approprié, tel qu'un récipient ou une cuve, muni d'un système d'agitation (tel qu'agitateur magnétique, des pales d'agitation, etc.). Le dispositif ainsi que le système d'agitation pourront être adaptés par l'homme du métier en fonction de la quantité de cristaux de zincate de calcium à fabriquer.

En particulier, l'hydroxyde de calcium et l'oxyde de zinc, un de ses précurseurs ou un de leurs mélanges sont mélangés, de préférence, en proportion stœchiométrique dans la suspension de départ. En particulier, pour un mélange de départ comprenant de l'hydroxyde de calcium et l'oxyde de zinc, le ratio molaire CA/Zn sera de 1/2 pour réaliser la réaction :

Ca(OH)₂ +2 ZnO + 4 H₂O -> Ca[Zn(OH)₃]₂.2H₂O

Ceci correspond, en proportions massiques à 74 Kg de Ca(OH)₂ pour 162.8 Kg de ZnO, soit 31.25% de Ca(OH)₂ et 68.75% de ZnO.

Il est bien sûr possible de s'écarter sensiblement de la proportion stœchiométrique, par exemple, en mélangeant de 27 à 35%, en poids, de Ca(OH)₂ avec respectivement de 73 à 65 % en poids de ZnO, par rapport au poids total de Ca(OH)₂ + ZnO, si l'on désire par exemple une composition de zincate de calcium contenant un excédent soit de chaux éteinte, soit d'oxyde de zinc.

Contrairement aux publications de l'art antérieur, l'eau n'est pas seulement présente dans la suspension de départ en proportion stœchiométrique. Celle-ci comprend en effet un fort excédent d'eau. Le ratio massique (eau) : (hydroxyde de calcium + oxyde de zinc) est supérieur ou égal à 1, de préférence va de 2 à 15 et en particulier va de 3 à 5. Cet excès d'eau permet non seulement la synthèse des cristaux de zincate de calcium, mais favorise également la mise en mouvement des microbilles du broyeur pour un meilleur broyage de la suspension de départ et donc une meilleure synthèse des cristaux de zincate de calcium.

En général, les matières premières de la suspension de départ se trouvent sous forme de poudre.

L'hydroxyde de calcium convenant pour la présente invention présente de préférence une taille de particules inférieure ou égale à 100 µm et de préférence inférieure ou égale à 10 µm, et en particulier la taille des particules va de 0.01 µm à 1 µm. L'hydroxyde de calcium de numéro CAS : 1305-62-0 et commercialisé par exemple par la société Sigma Aldrich de pureté supérieure ou égale à 96% convient pour réaliser le procédé de l'invention.

L'oxyde de zinc convenant pour la présente invention se trouve également sous forme de poudre et présente en général une taille de particules inférieure ou égale à 100µm et de préférence inférieure ou égale à 10 µm, et en particulier la taille des particules va de 0,01 µm à 1 µm. L'oxyde de zinc de numéro CAS : 1314-13-2 et commercialisé par exemple par la société Selectra de pureté supérieure ou égale à 99,9 % convient pour réaliser le procédé de l'invention.

De préférence, l'hydroxyde de calcium et l'oxyde de zinc présentent une pureté élevée, en général supérieure ou égale à 90 %, en particulier supérieure ou égale à 95 % et typiquement supérieure ou égale à 99 %, voire supérieure ou égale à 99,9 %.

Pour réduire au maximum la présence de carbonate de calcium dans l'hydroxyde, il convient avantageusement de partir de chaux vive préparée par calcination de carbonate de calcium à une température un peu plus élevée que la norme industrielle, par exemple 1050°C.

Une fois que la suspension de départ est préparée, celle-ci est amenée au broyeur tridimensionnel à microbilles 1 par l'intermédiaire généralement de la pompe péristaltique à débit réglable via l'entrée 5. La pompe péristaltique permet de continuer le mélange de la suspension de départ avant l'entrée dans la chambre 2. En outre, tel qu'indiqué précédemment, cette pompe permet d'introduire la suspension de départ dans la chambre 2 avec un débit de passage contrôlé.

Généralement, la suspension de départ est introduite à un débit de passage de 10 à 130 L/h, de préférence de 20 à 100 L/h et typiquement de 30 à 90 L/h.

Une fois que la suspension de départ est introduite dans la chambre 2, l'étape de broyage (2) débute.

Sous l'effet du courant créé par le débit de passage, la suspension de départ parcourt la chambre stationnaire 2 de l'entrée 5 à la sortie 6, tout en étant mise en mouvement par l'agitateur 8 qui permet un brassage intense de cette suspension avec les microbilles et, le cas échéant, avec les disques 10, les doigts 11, etc., le long de la paroi interne 9 de la chambre 2.

La vitesse de rotation de l'agitateur pourra par exemple varier de 4 à 20 Pi rad/s, de préférence de 4 à 8 Pi rad/s.

Le temps de séjour de la suspension de départ est inférieur ou égal à 15 min, de préférence inférieur ou égal à 1 minute, et va notamment dans le broyeur de 5 à 25 secondes et en particulier de 10 à 20 secondes. Il est en effet inhérent au volume apparent des billes et au débit de passage. Par exemple, si le volume total apparent des billes est de 270 cm³ (billes de masse volumique apparente de 3,7 g/cm³) et que le débit d'introduction de la suspension est de 30 L/h, soit 8,3 cm³/s, alors le temps de séjour de la suspension dans la chambre 2 est estimé à environ 32 secondes. Par conséquent, le temps de séjour peut être avantageusement réglé, par exemple en contrôlant la masse volumique apparente des microbilles, ainsi que le débit de passage.

On entend par « volume apparent » le volume des microbilles incluant l'air interstitiel entre les billes. La masse volumique apparente est le rapport entre la masse des microbilles et le volume apparent.

En outre, en jouant sur la taille des microbilles et le débit de passage, des cristaux plus au moins fins peuvent être obtenus. Par exemple, un broyage plus fin pourra être obtenu si le débit de la suspension de départ est ralenti.

L'étape de broyage peut être réalisée en mode continu ou mode discontinu en un ou plusieurs passages (mode pendulaire ou en recirculation).

Lorsqu'elle est réalisée en mode discontinu, le nombre de passage de la suspension dite de départ peut être de 1 à 10, préférentiellement de 1 à 5 (à savoir, après un premier passage, on récupère la suspension à la sortie 6 et on l'a réinjecte de nouveau, grâce à la pompe, dans la chambre 2 via l'entrée 5 pour permettre un deuxième passage). En particulier, le nombre de passage de la suspension de départ est de 1.

En effet, la Demanderesse a remarqué qu'un seul et unique passage dans le broyeur à microbilles, malgré un temps de séjour très court, permettait d'obtenir en sortie 6 une suspension comprenant très majoritairement des cristaux de zincate de calcium (notamment lorsque les matières de départ sont en proportion stœchiométrique), de pureté et de taille très satisfaisante.

Ainsi, cette étape de broyage sera réalisée de préférence en mode continu.

Avantageusement, cette étape de broyage se déroule à une température ambiante inférieure ou égale à 50°C, à savoir le plus souvert à une température ambiante allant de 15°C à 45°C, en particulier de 18°C à 35°C et en général est de l'ordre de 20°C à 25°C. En effet, le procédé selon l'invention ne nécessite pas de chauffage particulier afin de fabriquer les cristaux de zincate de calcium et ce, contrairement à l'enseignement divulgué dans les arts antérieurs.

Une fois l'étape de broyage réalisée, (3) la suspension de zincate de calcium est récupérée à la sortie 7 du broyeur 1 et est éventuellement (4) concentrée ou séchée de sorte à obtenir une poudre de zincate de calcium.

Selon une variante de réalisation, la suspension de zincate de calcium peut être séchée à l'air libre. Il est en effet apparu que la réaction de carbonatation est très lente entre le zincate de calcium et le CO₂ de l'air.

Selon une autre variante de réalisation, la suspension de zincate de calcium peut être séchée par étuvage ou par calcination, telle qu'à une température de 100 à 400°C pendant 1 à 4 heures.

Le produit final est généralement conservé jusqu'à son utilisation sous forme de pâte aqueuse ou mélangée à un solvant. Il peut aussi être séché et conservé dans un récipient étanche.

Comme cela sera démontré dans les essais ci-dessous, on obtient des cristaux de zincate de calcium homogènes et, en général, en forme de losange.

En particulier, la longueur du grand axe de ces cristaux va de 0,1 à 30 µm, de préférence de 1 à 25 µm (grande diagonale).

Avantageusement, la longueur du petit axe (la plus petite diagonale) va de 0,05 à 20 µm, préférentiellement de 0,11 à 12 µm.

Les cristaux de zincate de calcium obtenus par le procédé de l'invention présentent généralement les répartitions de population suivantes en fonction de leur granulométrie mesurées avec un granulométre laser en voie liquide :
5 µm ≤ Dₓ50 ≤13 µm, de préférence 8 µm ≤ Dₓ50 ≤18 µm et
10 µm ≤ Dₓ90 ≤ 25 µm, de préférence 12 µm ≤ Dₓ90 ≤ 22 µm.

En outre, telles que mentionnées ci-dessus, les caractéristiques des cristaux de zincate de calcium (taille, épaisseur, etc.) pourront être ajustées, en fonction des nécessités de l'utilisation envisagée, en faisant varier quelques paramètres, tels que le débit de passage, le diamètre des microbilles ou encore la teneur en eau dans la suspension de départ.

La présente invention porte également sur une suspension ou une poudre de cristaux de zincate de calcium obtenue selon le procédé défini ci-dessus, caractérisée en ce que les cristaux de zincate de calcium se présentent sous forme de micro-losange et présentent les répartitions de population suivantes en fonction de leur granulométrie mesurées avec un granulométre laser en voie liquide :
- 5 µm ≤ Dₓ50 ≤13 µm, de préférence 8 µm ≤ Dₓ50 ≤18 µm et
- 10 µm ≤ Dₓ90 ≤ 25 µm, de préférence 12 µm ≤ Dₓ90 ≤ 22 µm.

Les cristaux de zincate de calcium selon l'invention ont en effet, de façon intrinsèque, une forme de micro-losange dont les angles opposés sont égaux et les angles consécutifs sont complémentaires à 180°. Tels que mesurés sur la Figure 3, ces angles ont approximativement les valeurs de 125°+/- 5° et 55°+/- 5°. Cette forme intrinsèque est également vérifiée sur tous les clichés des Figures 6, 7 et 8, sous réserve des brisures conduisant parfois à seulement un morceau de losange.

En particulier, il a été constaté que la longueur du grand axe (grande diagonale) des cristaux de zincate de calcium va de préférence de 0,1 à 30 µm, en particulier de 1 à 25 µm, et va typiquement de 1 à 20 µm ; tandis que la longueur du plus petit axe (plus petite diagonale) peut aller de 0,05 à 20 µm, préférentiellement de 0,11 à 12 µm. Par conséquent, le procédé selon l'invention permet d'obtenir des micro-losanges et ce, contrairement aux procédés décrits dans l'art antérieur qui permettent seulement d'obtenir des cristaux de zincate de calcium en forme de losange (et non de micro-losange) dans lequel la longueur du grand axe est supérieure à 30 µm et est généralement supérieure ou égale à 60 µm.

Il a également été constaté que les cristaux de zincate de calcium ont une forme de lamelle dont l'épaisseur est très inférieure à leur longueur. Cela signifie que, plus la longueur des cristaux est petite, plus leur surface spécifique augmente, et plus leurs propriétés sont améliorées pour les utilisations mentionnées ci-dessous.

La Demanderesse a ainsi découvert, de manière surprenante, que les cristaux de zincate de calcium obtenus à partir du procédé selon l'invention se distinguaient des cristaux de zincate de calcium obtenus à partir des procédés décrits dans l'art antérieur de par notamment leur répartition granulométrique et leur forme en micro-losange. Ces caractéristiques sont induites par le procédé selon l'invention et ne peuvent être obtenues par simple broyage de cristaux de zincate de calcium, par exemple dans un broyeur. En effet, un tel broyage aurait notamment pour effet de détruire la forme en losange.

En outre, et comme cela est mentionné ci-dessus, ces caractéristiques présentent l'avantage d'augmenter la surface spécifique de la poudre ou de la suspension de cristaux de zincate de calcium permettant ainsi d'améliorer ses propriétés, en particulier pour les utilisations mentionnées ci-dessous. Il a été constaté que la surface spécifique (déterminée sur la méthode BET connue de l'homme du métier) des cristaux de zincate de calcium obtenus selon le procédé de l'invention est en général d'au moins 6 m²/g, de préférence d'au moins 10 m²/g, en particulier d'au moins 12 m²/g et typiquement d'au moins 15 m²/g, telle que 17 m²/g.

Au sens de l'invention, « une surface spécifique d'au moins 6 m²/g », englobe les valeurs suivantes ou tout intervalle compris entre les valeurs suivantes : 6 ; 7, 8 ; 9 ; 10 ; 11 ; 12 ; 13 ; 14 ; 15 ; 16 ; 17 ; etc.

La présente invention a également pour objet les utilisations de la poudre ou de la suspension de cristaux de zincate de calcium obtenue selon le procédé susmentionné.

Tout d'abord, le zincate de calcium peut être utilisé comme élément principal de la composition de l'anode de zinc d'un générateur électrochimique alcalin. Pour réduire la formation de dépôts de zinc, souvent dendritiques, spongieux ou pulvérulents au cours des phases de recharge de l'électrode de zinc, il est en effet nécessaire de limiter la solubilité de l'oxyde de zinc dans l'électrolyte alcalin, généralement constitué principalement de potasse.

De nombreux mélanges d'oxyde de zinc et d'hydroxyde de calcium ont été étudiés à cet effet : les résultats, relativement décevants, sont bien explicités, par exemple, dans la publication de R. Jain intitulée « Development of long-lived high-performance zinc-calcium/nickel oxide cells » issue du « Journal of Applied Electrochemistry 22 (1992):1039-1048 ».

Pour améliorer la situation, le document WO 98/44579 a proposé d'incorporer dans la masse active de l'anode, non pas un mélange d'oxyde de zinc et d'hydroxyde de calcium, mais directement le zincate de calcium, qui va se former in-situ au cours des cycles successifs de charge/décharge du générateur. Cette incorporation directe a l'avantage d'assurer une distribution uniforme du zincate de calcium dès avant la première mise en fonctionnement de la batterie, ce qui facilite sa formation initiale. Le nombre maximum de cycles possibles peut être augmenté, comme cela est démontré dans la publication de Jingxian Yu intitulée « A study of calcium zincate as negative electrode material for secondary batteries » issue du « Journal of Power Sources 103(2001): 93-97 ».

Egalement, le document WO 2006/0322208 enseigne que les performances en régime de décharge rapide peuvent être significativement améliorées si la dimension moyenne des cristaux est réduite à 30 µm. Cependant, pour réduire la taille des cristaux utilisés, les auteurs ont dû améliorer leur procédé chimique par un ensemencement avec des cristaux beaucoup plus petits, préalablement préparés par mécano-synthèse. Comme les procédés de mécano-synthèses sont difficilement transposables à l'échelle industrielle, ce document démontre l'intérêt des poudres plus fines mais n'apporte pas de solution pour leur production. Le procédé selon l'invention, qui permet d'obtenir industriellement des poudres dont la dimension moyenne est plus petite que 30 µm, apporte la solution recherchée et devrait même permettre une amélioration plus importante des performances du générateur.

Ainsi, l'emploi de cristaux de zincate de calcium en poudre ou en suspension obtenus selon le procédé de l'invention et présentant une dimension moyenne inférieure à 20µm, voire de 10 µm, permettraient d'obtenir de meilleures performances, notamment si on combine cette amélioration avec celle qui peut être obtenue par l'adjonction de poudre de nitrure de titane dans la composition de l'électrode comme cela est mentionné dans les documents WO 03/015197A2 et WO 2004/013064A2.

Ensuite, la poudre ou la suspension de zincate de calcium peut être utilisée pour fabriquer un catalyseur hétérogène pour la production de biodiesel comme cela est mentionné dans la publication de JM Rubio Caballero, « Calcium zincate as precursor of active catalysts for biodiesel production under mild conditions », Applied catalysis B : Environmental 91(2009) 339-346 ; dans le document WO 2010/112641 et dans la publication de Zeljka Kesic « Mechanochemical préparation and characterisation of Cao.Zno used as catalyst for biodiesel synthesis, publiée dans le livre « Applied Catalyst A : General 427-428 (2012) 58-65 (ELSEVIER).

En particulier, le zincate de calcium peut être utilisé pour la production de biodiesel par réaction du méthanol avec des huiles végétales, le zincate de calcium étant préalablement calciné à une température supérieure ou égale à 400°C, de préférence à une température entre 500°C et 700°C, en présence par exemple d'air, d'un gaz neutre, d'un mélange d'un gaz neutre et d'oxygène ou d'un mélange d'azote et d'oxygène. Cette mise en forme s'est révélée particulièrement stable en fonctionnement dans le méthanol. La capacité catalytique du zincate de calcium calciné dépendant certainement de la surface spécifique de la poudre utilisée pour sa mise en œuvre, les poudres obtenues par le procédé selon l'invention devraient donc être particulièrement efficaces.

Enfin, la poudre ou la suspension de zincate de calcium peut être utilisée en tant que produit antifongique. Cette utilisation est particulièrement avantageuse pour réaliser une protection durable des monuments en calcaire, par exemple les monuments Maya au Mexique, exposés à une atmosphère chaude et humide. En effet, la croissance de champignons altère la couche superficielle de ces monuments, comme cela est expliqué dans la publication de N.M. Gomez-Ortiz « Antifungal activity of Ca[Zn(OH)3]2.2H2O coatings for the préservation of limestone monuments: an in vitro study » ; publiée dans le livre « International Biodeterioration & Biodégradation 91 (2014) 1-8 ».

D'autres applications antifongiques sont envisageables, notamment pour la protection des végétaux.

### Exemples

La description des essais ci-dessous est donnée à titre d'exemple purement illustratif et non limitatif.

### A ° Caractérisation

### ✔ MEB

La microscopie électronique à balayage (MEB) a été effectuée sur un appareil Zeiss EVO MA 15, en électrons secondaires et rétrodiffusés (contraste chimique) avec un faisceau primaire de 5 à 20 kV.

Pour réaliser les essais par MEB, les suspensions de cristaux de zincate de calcium ont été préalablement séchées à l'air à 50°C de manière à obtenir une poudre.

### ✔ DRX

Les spectres de diffractométrie de rayons X (DRX) ont été collectés avec un diffractomètre D8 ADVANCE Série II commercialisé par la société Bruker en utilisant la radiation CuKα1 (0,15406 nm) selon la configuration Bragg-Brentano.

Le détecteur utilisé est un détecteur LynxEye 1D de chez Bruker. L'angle d'ouverture du détecteur est de 3° (150 bandes).

Les mesures DRX ont été réalisées entre 10° et 40°(à l'échelle 2θ) avec un pas de 0,008° (1 s /pas).

Pour réaliser les essais par DRX, les suspensions de cristaux de zincate de calcium ont également été préalablement séchées à l'air à 50°C,de manière à obtenir une poudre.

### ✔ Mesure de la granulométrie en voie liquide

Les mesures de granulométrie en voie liquide ont été réalisées avec un granulométre laser de la société Malvern Modèle Mastersizer 3000E.

Pour cette mesure, 5cm³ des échantillons de suspension de cristaux de zincate de calcium à analyser ont été préalablement dispersés dans un récipient présentant un diamètre de 40 mm à l'aide d'un générateur d'ultra-sons 28khz/40khz muni d'une sonotrode de diamètre de 20mm.

Cette mesure donne la répartition en volume (en %) des particules de l'échantillon pour chaque classe granulométrique en µm (qui correspond à la longueur la plus longue des cristaux de zincate de calcium).

### B° Procédure de préparation des échantillons testés

### ✔ Appareillage

Les essais ont été mis en œuvre dans un broyeur tridimensionnel à microbilles Dyno Mill MultiLab de la Société Willy A. Bachofen AG qui contient 1 KG de microbilles.

Les microbilles sont en oxyde de zirconium et présentent un diamètre de 0.5, 1,0 ou 2,0 mm. Les caractéristiques des microbilles utilisées pour les essais sont résumées dans le tableau 2 ci-dessous :

**Tableau 2**

| **Billes** | **500µm** | **1,0mm** | **2,00mm** |
|---|---|---|---|
| Composition (% en masse) | 93% ZrO₂ | 93% ZrO₂ | 93% ZrO₂ |
| | 5% Y₂O₃ | 5% Y₂O₃ | 5% Y₂O₃ |
| | 2% autres | 2% autres | 2% autres |
| Masse volumique spécifique | 6g/cm³ | 6g/cm³ | 6g/cm³ |
| Masse volumique apparente | 3,7 kg/L | 3,7 kg/L | 3,7 kg/L |
| Dureté de Vickers | 1250 HV1 | 1250 HV1 | 1250 HV1 |

Les microbilles de 500 µm sont notamment commercialisées sous le nom de marque Zirmil® Y Ceramic Beads par la société Saint-Gobain.

La chambre de broyage du broyeur présente une capacité de 309 mL et est remplie, en volume, par rapport à son volume total et en fonction des essais, de 80 % des microbilles décrites ci-dessus.

En fonctionnement, les microbilles sont mises en agitation par un agitateur à une vitesse de rotation de 2890 tr/min. L'agitateur comporte en outre deux disques mélangeurs en polyuréthane de 64mm de diamètre.

### ✔ Matières premières

Pour les essais, les matières premières de départ sont : de l'hydroxyde de calcium (Ca(OH)₂) présentant une pureté ≥ 96 % commercialisé par la société Sigma Aldrich et l'oxyde de zinc de pureté ≥ 99,9 % commercialisé par la société Selectra et de l'eau déminéralisée.

### ✔ Procédure générale mise en œuvre pour les essais :

Pour réaliser chaque essai ci-dessous, les étapes suivantes sont réalisées :
- une suspension de départ est préparée dans un Bécher à partir de l'hydroxyde de calcium et de l'oxyde de zinc, en proportion stœchiométrique, dans de l'eau déminéralisée, soit à une concentration « produits de départ/eau déminéralisée» de 300g/L ou de 600g/L ; puis la suspension de départ est mise sous agitation à l'aide d'un agitateur magnétique ;
- elle est ensuite amenée, via une pompe péristaltique à débit réglable au broyeur Dyno Mill MultiLab décrit ci-dessus : les débits de passage testés dans le broyeur sont de 30l/h ou de 90l/h correspondant à des temps de séjour respectifs de 12s et 4s ;
- la suspension de départ est ensuite broyée dans le broyeur comportant des microbilles de 0,5 mm ; de 1mm ou de 2mm de diamètre pendant une certaine durée (qui dépend comme indiqué ci-dessus du débit de passage de la suspension de départ) à température ambiante (20-25°C), permettant ainsi, à la sortie du broyeur, l'obtention d'une suspension de cristaux de zincate de calcium ;
- enfin, la suspension de cristaux de zincate de calcium est récupérée.

### C° Exemple 1 : Caractérisation des cristaux de zincate de calcium obtenus (figures 3 et 4)

Les cristaux de zincate de calcium obtenus selon le procédé de l'invention ont été préparés pour cet exemple suivant la procédure générale décrite ci-dessus et en utilisant :
- une suspension de départ comprenant une concentration de 300g/L ;
- un débit de passage de 30 L/h ;
- avec des billes de 500 µm de diamètre :
- et en n'effectuant qu'un passage dans le broyeur.

La suspension de cristaux de zincate de calcium a ensuite été récupérée et séchée à l'air libre à 50°C.

Puis des essais MEB et DRX ont été effectués. Les résultats de ces essais figurent respectivement aux figures 3 et 4.

Comme on peut le voir sur la figure 3, les cristaux de zincate de calcium obtenus selon le procédé de l'invention présentent de façon étonnante après seulement un passage dans le broyeur à microbilles et ainsi un temps de séjour de 12 secondes, une forme caractéristique en losange (au lieu de 48 heures selon les procédés de l'art antérieur). Selon cet essai, la longueur du grand axe de ce losange, c'est-à-dire sa diagonale la plus longue, est d'environ 19-20 µm et la longueur de l'autre diagonale est d'environ 10,47 µm. Comme on peut le voir sur la figure 3, les deux angles caractéristiques des losanges sont de 55,2° et de 126,9° (ainsi, deux angles consécutifs mesurent à eux deux sensiblement 180°).

En se référant à la figure 4, on s'aperçoit que les lignes du spectre DRX obtenues sont tout à fait conformes à celles du spectre de référence du zincate de calcium, connu de l'homme du métier (JCPDS 024-0222), aussi bien pour leurs positions angulaires que pour leurs intensités relatives, à savoir :
- on note la présence des deux pics principaux (plans cristallographiques [100] et [200]) autour respectivement de 14,15° et 28,6°, le pic [100] ayant effectivement une intensité de l'ordre de 90% du pic [200] ;
- tous les autres pics significatifs sont présents aux angles prévus, tels que 16,1 °/ 16,3°/ 17,6°/ 21,6°/ 22,6°/ 24,7°/ 24,9°/ 29,1°/ 29,7°/,80°/ 31,0°/31,7°/ 32,0°/ 32,8°/ 32,8°/ 33,0°/36,5° avec sensiblement les intensités prévues ;

Ce spectre DRX montre qu'en outre l'échantillon analysé présente une excellente pureté. En effet, aucune contamination n'est répertoriée :
- le pic principal de ZnO (selon JCPDS 036-1451) qui est à 29,4°, est à peine visible sur le spectre ;
- les pics principaux de Ca(OH)₂ (selon JCPDS 044-1481), qui sont à 18,0° / 28,7°/34,1° n'y apparaissent pas non plus ;
- et le pic principal de CaCO₃ (selon JCPDS 005-0586) qui est à 29,4° est à peine visible.

Enfin, tout comme pour les autres caractéristiques, les cristaux de zincate de calcium obtenus avec le procédé selon l'invention présentent une masse volumique (g/cm³) qui est conforme à celle donnée dans la littérature, à savoir 2,60 g/cm³.

En conclusion, le procédé de l'invention permet d'obtenir immédiatement des cristaux de zincate de calcium très pur et de forme caractéristique en losange.

### D° Exemple 2 : Granulométrie des cristaux de zincate de calcium en fonction de la concentration des matières premières de départ et du débit de passage (figure 5).

Pour cet exemple, différentes concentrations en matières premières (hydroxyde de calcium et oxyde de zinc) ont été testées, ainsi que différents débits de passage afin de vérifier leur impact sur la granulométrie des cristaux obtenus et en particulier sur la taille du grand axe des cristaux en losange de zincate de calcium.

Ainsi, les cristaux de zincate de calcium testés ont été synthétisés suivant la procédure générale mentionnée ci-dessus et en utilisant les paramètres suivants :
- une suspension de départ comprenant une concentration de 300g/L ou de 600g/L ;
- un débit de passage de 30 L/h ou de 90 L/h ;
- avec des billes de 500 µm de diamètre :
- et en n'effectuant qu'un passage dans le broyeur.

Le résultat de ces essais est illustré sur la figure 6.

Ainsi, cette figure 6 montre que, quelles que soient les variations de paramètre (concentration à 300g/L ou 600g/L ou débit de passage de 30L/h ou 90L/h), la taille de la plus grande diagonale des cristaux en losange de zincate de calcium est sensiblement constante.

En particulier, on obtient la répartition granulométrique suivante (tableau 3) :

**Tableau 3**

| **Essais** | **Dx(10) (µm)** | **Dx(50) (µm)** | **Dx(90) (µm)** |
|---|---|---|---|
| 1) 300g/L - 30L/h | 4,75 | 9,02 | 15,1 |
| 2) 300g/L - 90L/h | 5,03 | 9,97 | 16,9 |
| 3) 600g/L - 30L/h | 6,12 | 11,1 | 17,9 |
| 4) 600g/L - 90L/h | 6,36 | 12,8 | 21,1 |
| *Moyenne* | *5,57* | *10,7* | *17,8* |
| *Ecart type* | *0,792* | *1,61* | *2,50* |

Ainsi, le procédé selon l'invention permet d'obtenir des cristaux de zincate homogènes de petites tailles (entre 4 et 20 µm) avec absence de grands cristaux quelle que soit la concentration des matières premières de départ et du débit de passage.

### E° Exemple 3 : Influence des diamètres des billes (figures 6 à 8)

Cet exemple a pour but de déterminer si la taille des billes utilisées lors de la mise en œuvre du procédé a une influence sur la qualité des cristaux de zincate de calcium obtenus.

De même que pour les essais des exemples 1 et 2, les cristaux de zincate de calcium testés ont été synthétisés suivant la procédure générale mentionnée ci-dessus et en utilisant en particulier les paramètres suivants :
- une suspension de départ comprenant une concentration de 300g/L ou de 600g/L ;
- un débit de passage de 30 L/h ou de 90 L/h ;
- avec des billes de 500 µm, 1mm ou 2 mm de diamètre :
- et en n'effectuant qu'un passage dans le broyeur.

Les résultats de ces essais sont illustrés aux figures 6 à 8.

D'après les clichés MEB, on constate que la conversion de l'hydroxyde de calcium et de l'oxyde de zinc en zincate de calcium est très proche de 100% quelle que soit la taille des billes utilisées. Cependant, lorsque le procédé est mis en œuvre avec des billes présentant un diamètre moyen de 1 mm ou de 2 mm, il apparaît quelques résidus de matières non transformées sous forme de poussière blanche. On estime que la proportion de ces résidus est d'environ 1% en masse. Ainsi, des billes présentant un diamètre < 1 mm permettent d'obtenir de meilleurs résultats dans les conditions énoncées ci-dessus.

On constate également que les billes de diamètre 0,5 mm permettent d'obtenir des cristaux de plus grandes tailles (la taille mesurée étant la taille du grand axe des losanges de zincate de calcium).

En outre, tout comme pour l'essai 2, on remarque que la taille du grand axe est inférieure à 20 µm avec absence totale de grands cristaux.

En conclusion, la taille des billes utilisées, lorsque celle-ci est inférieure ou égale à 2 mm, impacte faiblement la taille des cristaux de zincate de calcium obtenus. Cependant, une taille de billes < 1 mm permet d'obtenir une meilleure synthèse du zincate de calcium en un seul passage de la suspension de départ dans le broyeur.

### F° Conclusion

Ainsi, il a été démontré que pour tous les essais, une poudre insoluble dans l'eau était obtenue. Après contrôle par analyse DRX, il est apparu que cette poudre correspondait à des cristaux de zincate de calcium (tous les spectres DRX effectués par la Demanderesse montrent une transformation intégrale des composés de départ en zincate de calcium, les spectres n'indiquent en effet que les raies correspondant au zincate de calcium, avec seulement quelques traces résiduelles des composés initiaux).

Les clichés obtenus par microscopie à balayage électronique mettent en évidence les cristaux en losange, caractéristiques du zincate de calcium. Il s'avère également que la poudre obtenue est principalement constituée de cristaux bien formés dont la longueur du grand axe est généralement inférieure à 20µm.

En outre, le broyeur de laboratoire permet par exemple de produire 54kg/h de cristaux de zincate en calcium. Ce chiffre pourrait être multiplié par 10 avec l'adjonction d'un accessoire accélérateur. Egalement, il existe des versions industrielles du broyeur utilisant par exemple jusqu'à 100 kg de billes. Avec ce type de broyeur, il serait par conséquent possible de fabriquer plusieurs tonnes à l'heure de zincate de calcium.

## Revendications

1. Procédé de fabrication de cristaux de zincate de calcium qui comprend au moins les étapes suivantes :
(1) la mise en suspension d'au moins : de l'hydroxyde de calcium (Ca(OH)₂) et de l'oxyde de zinc (ZnO), ou d'un de ses précurseurs ou d'un de leurs mélanges, avec de l'eau, dite suspension de départ, le ratio massique (eau) : (hydroxyde de calcium+ oxyde de zinc ou un de ses précurseurs ou un de leurs mélanges) étant supérieur ou égal à 1, de préférence allant de 2 à 15 et en particulier allant de 3 à 5 ;
(2) le broyage de ladite suspension de départ à une température ambiante inférieure ou égale à 50°C dans un broyeur tridimensionnel à microbilles en phase humide pendant un temps de séjour inférieur ou égal à 15 min et allant notamment de 5 à 25 secondes ;
(3) la récupération en sortie du broyeur d'une suspension de cristaux de zincate de calcium, et
(4) optionnellement, ladite suspension de cristaux de zincate de calcium est concentrée ou séchée de sorte à obtenir une poudre de cristaux de zincate de calcium.

2. Procédé selon la revendication 1, dans lequel l'hydroxyde de calcium et l'oxyde de zinc ou un de ses précurseurs ou un de leurs mélanges sont mélangés en proportion stœchiométrique correspondant de préférence à un ratio molaire Ca/Zn=1/2.

3. Procédé selon la revendication 1 ou la revendication 2, dans lequel la longueur du grand axe des cristaux de zincate de calcium va de 0,1 µm à 30 µm, de préférence de 1 µm à 25 µm.

4. Procédé selon les revendications précédentes, dans lequel les cristaux de zincate de calcium présentent les répartitions granulométriques suivantes : 5 µm ≤ Dₓ50 ≤ 13 µm et 10 µm ≤ Dₓ90 ≤ 20 µm mesurées avec un granulométre laser en voie liquide.

5. Procédé selon l'une des revendications précédentes, dans lequel les microbilles sont de forme sphérique et présentent un diamètre moyen allant de 0,05 mm à 4 mm, de préférence de 0,2 à 3 mm, en particulier de 0,3 à 2 mm et typiquement de l'ordre de 0,5 à 1 mm.

6. Procédé selon l'une des revendications précédentes, dans lequel les microbilles présentent une dureté de Vickers mesurée selon la norme EN ISO 6507-1 supérieure ou égale à 900 HV1, de préférence allant de 900 HV1 à 1600 HV1, typiquement allant de 1000 à 1400 HV1.

7. Procédé selon l'une des revendications précédentes, dans lequel les microbilles présentent une masse volumique réelle allant de 2 à 15 g/cm³.

8. Procédé selon l'une des revendications précédentes, dans lequel le broyage s'effectue à une température ambiante allant de 15°C à 45°C, en particulier de 18°C à 35°C et en général est de l'ordre de 20°C à 25°C.

9. Procédé selon l'une des revendications précédentes, dans lequel le broyeur tridimensionnel à microbilles comprend au moins :
- une chambre de broyage stationnaire de forme générale cylindrique s'étendant selon un axe longitudinal XX, ladite chambre étant remplie au moins, en partie, par lesdites microbilles et comprend: à une première extrémité au moins une entrée servant à introduire ladite suspension de départ, et à une seconde extrémité, une sortie comportant un moyen de séparation apte à n'évacuer que la suspension de zincate de calcium formée dans ladite chambre ; et
- un agitateur, disposé dans la chambre de broyage stationnaire, se présentant sous forme d'une tige allongée selon l'axe longitudinal XX, ledit agitateur étant apte à mettre en mouvement l'ensemble microbilles/suspension de départ.

10. Procédé selon la revendication 9, dans lequel les microbilles représentent, en volume, par rapport au volume total de la chambre stationnaire de 5 % à 85 %, de préférence de 55 % à 70 %.

11. Procédé selon l'une des revendications précédentes, dans lequel le broyeur tridimensionnel à microbilles fonctionne en continu.

12. Poudre ou suspension de cristaux de zincate de calcium susceptible d'être obtenue selon un procédé selon l'une quelconque des revendications 1 à 11, **caractérisée en ce que** les cristaux de zincate de calcium se présentent sous forme de micro-losange et présentent les répartitions de population suivantes en fonction de leur granulométrie : 5µm ≤ Dₓ50 ≤ 13µm et 10µm ≤ Dₓ90 ≤ 20 µm mesurées avec un granulométre laser en voie liquide.

13. Utilisation de la poudre ou de la suspension de cristaux de zincate de calcium telle que définie à la revendication 12, pour fabriquer une anode de zinc d'un générateur électrochimique alcalin.

14. Utilisation de la poudre ou de la suspension de cristaux de zincate de calcium telle que définie à la revendication 12, pour fabriquer un catalyseur hétérogène pour la production de biodiesel, le zincate de calcium étant préalablement calciné à une température supérieure ou égale à 400°C.

15. Utilisation de la poudre ou de la suspension de cristaux de zincate de calcium telle que définie à la revendication 12, en tant que produit antifongique.

## Patentansprüche

1. Verfahren zur Herstellung von Calciumzinkat-Kristallen, das mindestens folgende Schritte umfasst:
(1) Suspendieren von mindestens Calciumhydroxid (Ca(OH)₂) und Zinkoxid (ZnO) oder einer Vorstufe davon oder einer Mischung davon mit Wasser, was als Ausgangssuspension bezeichnet wird, wobei das Massenverhältnis (Wasser): (Calciumhydroxid + Zinkoxid oder eine Vorstufe davon oder eine Mischung davon) größer oder gleich 1 ist und vorzugsweise im Bereich von 2 bis 15 und insbesondere im Bereich von 3 bis 5 liegt;
(2) Mahlen der Ausgangssuspension bei einer Umgebungstemperatur kleiner oder gleich 50 °C auf einer dreidimensionalen Feuchtphasen-Mikrokugelmühle über eine Verweilzeit kleiner oder gleich 15 min und insbesondere im Bereich von 5 bis 25 Sekunden;
(3) Gewinnen einer Suspension von Calciumzinkat-Kristallen am Ausgang der Mühle und
(4) gegebenenfalls wird die Suspension von Calciumzinkat-Kristallen aufkonzentriert oder getrocknet, wodurch man ein Pulver von Calciumzinkat-Kristallen erhält.

2. Verfahren nach Anspruch 1, wobei das Calciumhydroxid und das Zinkoxid oder eine Vorstufe davon oder eine Mischung davon in einem stöchiometrischen Verhältnis vorliegen, das vorzugsweise einem Ca/Zn-Molverhältnis = 1/2 entspricht.

3. Verfahren nach Anspruch 1 oder Anspruch 2, wobei die Länge der Hauptachse der Calciumzinkat-Kristalle im Bereich von 0,1 µm bis 30 µm, vorzugsweise von 1 µm bis 25 µm, liegt.

4. Verfahren nach den vorhergehenden Ansprüchen, wobei die Calciumzinkat-Kristalle die folgenden, mit einem Flüssigkeits-Lasergranulometer gemessenen Teilchengrößenverteilungen aufweisen: 5 µm ≤ Dx50 ≤ 13 µm und 10 µm ≤ Dₓ90 ≤ 20 µm.

5. Verfahren nach einem der vorhergehenden Ansprüche, wobei die Mikrokugeln kugelförmig sind und einen mittleren Durchmesser im Bereich von 0,05 mm bis 4 mm, vorzugsweise von 0,2 bis 3 mm, insbesondere von 0,3 bis 2 mm und typischerweise etwa 0,5 bis 1 mm aufweisen.

6. Verfahren nach einem der vorhergehenden Ansprüche, wobei die Mikrokugeln eine gemäß EN-ISO-Norm 6507-1 gemessene Vickers-Härte größer oder gleich 900 HV1, vorzugsweise im Bereich von 900 HV1 bis 1600 HV1, typischerweise im Bereich von 1000 bis 1400 HV1, aufweisen.

7. Verfahren nach einem der vorhergehenden Ansprüche, wobei die Mikrokugeln eine Rohdichte im Bereich von 2 bis 15 g/cm³ aufweisen.

8. Verfahren nach einem der vorhergehenden Ansprüche, wobei das Mahlen bei einer Umgebungstemperatur durchgeführt wird, die im Bereich von 15 °C bis 45 °C, insbesondere von 18 °C bis 35 °C, liegt und typischerweise etwa 20 °C bis 25 °C beträgt.

9. Verfahren nach einem der vorhergehenden Ansprüche, wobei die dreidimensionale Mikrokugelmühle mindestens
- eine stationäre Mahlkammer mit allgemein zylindrischer Form, die sich entlang einer Längsachse XX erstreckt, wobei die Kammer zumindest teilweise mit Mikrokugeln gefüllt ist und an einem ersten Ende mindestens einen Eingang, der zum Eintragen der Ausgangssuspension dient, und an einem zweiten Ende einen Ausgang, der ein Trennmittel umfasst, das dazu befähigt ist, nur die in der Kammer gebildete Calciumzinkat-Suspension auszutragen, aufweist; und
- einen in der stationären Mahlkammer angeordneten Rührer, der in Form eines entlang der Längsachse XX langgestreckten Stabs vorliegt, wobei der Rührer dazu befähigt ist, die Kombination von Mikrokugeln und Ausgangssuspension in Bewegung zu versetzen;
aufweist.

10. Verfahren nach Anspruch 9, wobei die Mikrokugeln, bezogen auf das Gesamtvolumen der stationären Kammer, 5 bis 85 Vol.-% und vorzugsweise 55 bis 70 Vol.-% ausmachen.

11. Verfahren nach einem der vorhergehenden Ansprüche, wobei die dreidimensionale Mikrokugelmühle kontinuierlich arbeitet.

12. Pulver oder Suspension von Calciumzinkat-Kristallen, das bzw. die gemäß einem Verfahren nach einem der Ansprüche 1 bis 11 erhältlich ist, **dadurch gekennzeichnet, dass** die Calciumzinkat-Kristalle in Mikrorautenform vorliegen und die folgenden, mit einem Flüssigkeits-Lasergranulometer gemessenen Populationsverteilungen als Funktion ihrer Teilchengröße aufweisen: 5 µm ≤ Dₓ50 ≤ 13 µm und 10 µm ≤ Dₓ90 ≤ 20 µm.

13. Verwendung des Pulvers bzw. der Suspension von Calciumzinkat-Kristallen gemäß Anspruch 12 zur Herstellung einer Zinkanode eines alkalischen elektrochemischen Generators.

14. Verwendung des Pulvers bzw. der Suspension von Calciumzinkat-Kristallen gemäß Anspruch 12 zur Herstellung eines heterogenen Katalysators zur Herstellung von Biodiesel, wobei das Calciumzinkat vorher bei einer Temperatur größer oder gleich 400 °C calciniert wird.

15. Verwendung des Pulvers bzw. der Suspension von Calciumzinkat-Kristallen gemäß Anspruch 12 als antimykotisches Produkt.

## Claims

1. A process for manufacturing calcium zincate crystals which comprises at least the following steps:
(1) placing in suspension at least: calcium hydroxide (Ca(OH)₂) and zinc oxide (ZnO) or a precursor thereof, or a mixture thereof, with water, referred to as the starting suspension the mass ratio of (water):(calcium hydroxide + zinc oxide, a precursor thereof or a mixture thereof) being greater than or equal to 1, preferably ranging from 2 to 15 and in particular ranging from 3 to 5;
(2) milling said starting suspension at an ambient temperature of less than or equal to 50°C, in a three-dimensional wet-phase microball mill for a residence time of less than or equal to 15 minutes, and ranging especially from 5 to 25 seconds;
(3) recovering at the mill outlet a suspension of calcium zincate crystals, and
(4) optionally, said suspension of calcium zincate crystals is concentrated or dried so as to obtain a powder of calcium zincate crystals.

2. The process as claimed in claim 1, in which the calcium hydroxide and the zinc oxide or a precursor thereof or a mixture thereof are mixed in stoichiometric proportion corresponding to a Ca/Zn mole ratio = 1/2.

3. The process as claimed in claim 1 or claim 2, in which the length of the major axis of the calcium zincate crystals ranges from 0.1 µm to 30 µm, preferably ranges from 1 µm to 25 µm.

4. The process as claimed in the preceding claims, in which the calcium zincate crystals have the following particle size distributions: 5 µm ≤ Dₓ50 ≤ 13 µm and 10 µm ≤ Dₓ90 ≤ 20 µm measured with a liquid-route laser particle size analyzer.

5. The process as claimed in the preceding claims, in which the microballs are spherical and have a mean diameter ranging from 0.05 mm to 4 mmm preferably ranges from 0.2 to 3 mm, in particular from 0.3 to 2 mm, and typically approximately from 0.5 to 1 mm.

6. The process as claimed in the preceding claims, in which the microballs have a Vickers hardness measured according to standard EN ISO 6507-1 of greater than or equal to 900 HV1, preferably ranging from 900 HV1 to 1600 HV1, typically from 1000 to 1400 HV1.

7. The process as claimed in the preceding claims, in which the microballs have a real mass per unit volume ranging from 2 to 15 g/cm³.

8. The process as claimed in the preceding claims, in which the milling is performed at an ambient temperature ranging from 15°C to 45°C, in particular from 18°C to 35°C and generally in the order from 20°C to 25°C.

9. The process as claimed in the preceding claims, in which the three-dimensional microball mill comprises at least:
- a stationary milling chamber of cylindrical general shape extending along a longitudinal axis XX, said chamber being at least partly filled with said microballs and comprises: at a first end at least one inlet serving to introduce said starting suspension, and at a second end, an outlet comprising a separating means that is capable of evacuating only the calcium zincate suspension thus formed in said chamber; and
- an agitator, arranged in the stationary milling chamber, which is in the form of a rod elongated along the longitudinal axis XX, said agitator being capable of placing the microball/starting suspension assembly in motion.

10. The process as claimed in claim 9, in which the microballs represent, by volume, relative to the total volume of the stationary chamber from 5% to 85%, preferably from 55% to 70%.

11. The process as claimed in the preceding claims, in which the three-dimensional microball mill functions continuously.

12. A powder or suspension of calcium zincate crystals that may be obtained according to a process as claimed in any one of the preceding claims 1 to 11, **characterized in that** the calcium zincate crystals are in micro-lozenge form and have the following population distributions as a function of their particle size: 5 µm ≤ Dₓ50 ≤ 13 µm and 10 µm ≤ Dₓ90 ≤ 20 µm measured with a liquid-route laser particle size analyzer.

13. Use of a powder or suspension of calcium zincate crystals as defined in claim 12 for manufacturing a zinc anode of an alkaline electrochemical generator.

14. Use of a powder or suspension of calcium zincate crystals as defined in claim 12 for manufacturing a heterogeneous catalyst for the production of biodiesel, the calcium zincate being calcined beforehand at a temperature of greater than or equal to 400°C.

15. Use of a powder or suspension of calcium zincate crystals as defined in claim 12 as an antifungal product.
